(19) Europäisches Patentamt
European Patent Office
Office européen des brevets

(11) EP 3 559 055 B1

(12) FASCICULE DE BREVET EUROPEEN

(45) Date de publication et mention de la délivrance du brevet:
**16.04.2025 Bulletin 2025/16**

(21) Numéro de dépôt: **17822281.6**

(22) Date de dépôt: **20.12.2017**

(51) Classification Internationale des Brevets (IPC):
***C08C 19/22*** *(2006.01)* ***C08F 236/06*** *(2006.01)*
***C08F 236/10*** *(2006.01)* ***C08C 19/44*** *(2006.01)*
***C08C 19/25*** *(2006.01)*

(52) Classification Coopérative des Brevets (CPC):
(C-Sets disponibles)
**C08C 19/22; C08C 19/25; C08C 19/44;**
**C08F 236/10;** C08F 236/06 (Cont.)

(86) Numéro de dépôt international:
**PCT/EP2017/083896**

(87) Numéro de publication internationale:
**WO 2018/115167 (28.06.2018 Gazette 2018/26)**

(54) **PROCÉDÉ DE SYNTHÈSE EN CONTINU D'ÉLASTOMÈRE DIÉNIQUE MODIFIÉ AVEC INITIATEUR AMIDURE DE LITHIUM**

VERFAHREN ZUR KONTINUIERLICHEN SYNTHESE VON MODIFIZIERTEM DIENELASTOMER MIT LITHIUMAMIDINITIATOR

METHOD FOR CONTINUOUS SYNTHESIS OF MODIFIED DIENE ELASTOMER WITH LITHIUM AMIDE INITIATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2016 FR 1663003**

(43) Date de publication de la demande:
**30.10.2019 Bulletin 2019/44**

(73) Titulaire: **Compagnie Générale des Etablissements Michelin**
**63000 Clermont-Ferrand (FR)**

(72) Inventeurs:
- **DESSENDIER, Marie-Hélène**
**63040 Clermont-Ferrand Cedex 09 (FR)**
- **DIRE, Charlotte**
**63040 Clermont-Ferrand Cedex 09 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**EP-A1- 0 992 537** **EP-A1- 1 829 906**
**WO-A1-01/81430** **WO-A1-2009/077837**
**WO-A1-2014/040640** **WO-A1-2016/001372**
**WO-A1-2016/162528** **WO-A1-2017/001637**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)

C-Sets
**C08F 236/10, C08F 2/06;**
**C08F 236/10, C08F 4/48;**
C08F 236/06, C08F 212/08

## Description

La présente invention se rapporte à un procédé de synthèse en continu, au moyen de plusieurs réacteurs en série, d'un élastomère diénique modifié, permettant d'obtenir dans le cas d'une initiation avec un amidure de lithium, un taux élevé de fonctions dans l'élastomère autres que celles apportées par l'initiateur.

Depuis que les économies de carburant et la nécessité de protéger l'environnement sont devenues une priorité, il est souhaitable de produire des polymères possédant de bonnes propriétés mécaniques et une hystérèse aussi faible que possible afin de pouvoir les mettre en œuvre sous forme de compositions caoutchouteuses utilisables pour la fabrication de divers produits semi-finis entrant dans la constitution d'enveloppes de pneumatiques tels que, par exemple, des sous-couches, des gommes de liaison entre caoutchoucs de différentes natures ou d'enrobage de renforts métalliques ou textiles, des gommes de flancs ou des bandes de roulement et obtenir des pneumatiques aux propriétés améliorées, notamment possédant une résistance au roulement réduite.

La réduction de l'hystérèse des mélanges est un objectif permanent de l'industrie du pneumatique afin de limiter la consommation de carburant et de préserver ainsi l'environnement.

Pour atteindre l'objectif de baisse d'hystérèse, de nombreuses solutions ont déjà été expérimentées. En particulier, on peut citer la modification de la structure des polymères et des copolymères diéniques en fin de polymérisation au moyen d'agents de fonctionnalisation, de couplage ou d'étoilage dans le but d'obtenir une bonne interaction entre le polymère ainsi modifié et la charge, qu'il s'agisse du noir de carbone ou d'une charge inorganique renforçante. On peut également citer l'utilisation d'un amorceur fonctionnel possédant un groupement fonctionnel interactif avec la charge.

A titre d'illustration de cet art antérieur, on peut mentionner l'utilisation d'élastomères diéniques fonctionnalisés par des composés alcoxysilanes et des composés aminés.

On peut citer le brevet JP4655706B2 qui propose de combiner la fonctionnalisation du bout de chaîne vivant avec un composé du type alcoxysilane porteur d'une fonction amine à l'amorçage avec un alkyllithium fonctionnel amine dans le but de minimiser l'hystérèse. De la même façon, dans la demande de brevet US20120245275A1, il est proposé de combiner la fonctionnalisation du bout de chaîne vivant avec un composé du type alcoxysilane porteur d'une fonction amine à l'amorçage avec un amidure de lithium mais également avec un monomère fonctionnel du type vinylaminosilane. On peut aussi citer le document WO 2016/162528 qui divulgue un procédé de synthèse d'un élastomère diénique modifié avec la mise en œuvre de différents agents de fonctionnalisation, notamment des amidures de lithium mais aussi du n-butyl lithium. Enfin, dans les demandes de brevets WO2015063161A1, WO2015044225A1, WO2015018772A1 et WO2015018600A1, il est proposé de combiner l'amorçage avec un amidure de lithium avec la réaction du bout de chaîne vivant avec des composés du type alcoxysilane porteurs de différents groupements possédant une affinité envers la silice.

Comme illustré ci-dessus, l'utilisation d'amorceurs fonctionnels possédant un groupement interactif envers la silice tels que les alkyllithium fonctionnels amine ou les amidures de lithium présente un intérêt pour diminuer la résistance au roulement en diminuant la dissipation d'énergie liée aux bouts de chaîne libres. Il semble donc intéressant de pouvoir les utiliser à l'échelle industrielle dans des procédés de synthèse d'élastomères compétitifs.

Il est connu de l'homme de l'art que les procédés de synthèse en continu sont plus compétitifs que les procédés de synthèse en discontinus pour lesquels des arrêts et redémarrages fréquents sont nécessaires. Alors que l'utilisation d'amorceur du type amidure de lithium conduit à l'obtention conjointe de conversions en monomères élevées (supérieures à 85%) et de taux de chaînes polymères vivantes sous forme $C^-Li^+$ élevés en procédé discontinu (supérieurs ou égaux à 90%), une conversion élevée en monomères (supérieure à 85%) est associée à un faible taux de chaînes polymère vivantes et donc à un faible taux de chaînes fonctionnalisables (inférieur à 60%) et un taux élevé de chaînes polymère vivantes donc fonctionnalisables (supérieur ou égal à 90%), est associé à une faible conversion en monomères (inférieure à 70%) dans le cas d'un procédé continu classique à un réacteur.

Le but de l'invention est donc d'identifier un procédé de synthèse en continu permettant l'obtention conjointe d'une conversion élevée en monomères (supérieure à 70% en masse) et d'un taux de chaînes polymères vivantes élevé (supérieur ou égal à 90% en nombre) et donc un taux de chaînes polymère fonctionnalisables élevé à l'issue de l'étape de polymérisation dans le cas d'une initiation avec un amidure de lithium. Un taux de polymère vivant élevé à l'issue de l'étape de polymérisation est souhaitable afin de pouvoir fonctionnaliser, coupler ou étoiler à souhait les chaînes polymères.

Les inventeurs ont maintenant découvert de façon surprenante que les buts de l'invention pouvaient être obtenus par un procédé de synthèse en continu comprenant plusieurs réacteurs en série, la conversion massique dans le premier réacteur étant inférieure à 70%, la polymérisation étant poursuivie de telle façon que la conversion massique totale à la sortie du dernier réacteur soit supérieure à 70%.

L'invention a donc pour objet un procédé de synthèse en continu d'un élastomère diénique modifié comprenant au moins un atome de silicium directement relié à la chaîne élastomère comprenant :

a) une étape de polymérisation au moyen de n réacteurs r1 à rn, équipés d'un système d'agitation interne, supposés parfaitement agités, disposés en série, n variant de 2 à 15, de préférence de 2 à 9, le réacteur r1 étant alimenté par une

solution d'entrée comprenant un solvant, un ou plusieurs monomères, un initiateur de polymérisation anionique choisi parmi les amidures de lithium et un agent polaire, la conversion massique C1 dans le premier réacteur étant inférieure à 70%, un ou plusieurs des réacteurs r2 à rn étant éventuellement en outre alimenté(s) par réinjection d'une solution, de préférence purifiée, comprenant du solvant et/ou des monomères et/ou de l'agent polaire,

la conversion massique C1 dans le premier réacteur étant inférieure à 70%,

où

$$C1=P1/M1$$

où P1 est la masse de polymère formé à la sortie du réacteur r1,
où M1 est la quantité massique de monomère(s) introduit(s) dans le réacteur r1,

la conversion massique totale Cn à la sortie du réacteur rn étant supérieure ou égale à 70%,

où

$$Cn = \frac{Pn}{\sum_{1}^{n} Mi}$$

où Pn est la masse de polymère formé à la sortie du réacteur rn,
où Mi est la quantité massique de monomère(s) introduit(s) dans le réacteur ri, i variant de 1 à n,

b) une étape de modification de l'élastomère diénique vivant obtenu à l'étape précédente au moyen d'un agent de fonctionnalisation, de couplage ou d'étoilage, qui permet d'introduire dans l'élastomère un groupement fonctionnel comprenant au moins un atome de silicium directement relié à la chaîne élastomère,

l'agent de fonctionnalisation, de couplage ou d'étoilage, qui permet d'introduire dans l'élastomère un groupement fonctionnel comprenant au moins un atome de silicium directement relié à la chaîne élastomère, est au moins un composé répondant à la formule II :

$SiR4_n(OR')_{4-p-q}(R3\text{-}X)_c$, (Formule II)

dans laquelle,

- R3 est un radical hydrocarboné divalent aliphatique, saturé ou non, cyclique ou non, en $C_1$-$C_{18}$, aromatique en $C_6$-$C_{18}$;
- X est un atome d'hydrogène ou une fonction susceptible d'interagir avec une charge renforcante comprenant au moins un hétéroatome choisi parmi N, S, O, P ;
- les radicaux R', substitués ou non substitués, identiques ou différents, représentent un groupe alkyle en $C_1$-$C_{10}$;
- les radicaux R4, substitués ou non substitués, identiques ou différents, représentent un groupe alkyle en $C_1$-$C_{10}$;
- p représente un nombre entier de valeur allant de 0 à 2, q représente un nombre entier de valeur 0 ou 1, sous réserve que $p+q \leq 2$.

Dans le cadre de la présente demande, on appelle réinjection éventuelle le fait de répéter l'action d'injection dans un réacteur ri', différent du réacteur r1, déjà alimenté par le flux issu de ri'-1. La réinjection peut être faite directement dans un ou plusieurs des réacteurs, ou, avantageusement, par mélangeage au flux issu de ri'-1. La réinjection peut être faite avec des flux de composition identique ou différente du flux d'alimentation de r1. Quand la réinjection a lieu dans au moins deux réacteurs, les natures de ces réinjections peuvent être identiques ou différentes. On appelle monomère réinjecté, le monomère injecté dans ri' non issu du flux provenant de ri'-1.
Ainsi, par quantité massique Mi de monomère(s) introduit(s) dans le réacteur ri, on entend, lorsque i=1, la quantité de monomère(s) contenu(s) dans la solution d'entrée et introduit(s) à ce titre dans le réacteur 1, et lorsque i= 2 à n, la quantité de monomère(s) éventuellement réinjecté(s) dans le réacteur i.
Le contrôle de la conversion dans tous les réacteurs, en particulier dans le premier et le dernier réacteur, est assuré par la température, le temps de séjour, la quantité d'agent polaire et la quantité de monomère entrant dans ces réacteurs, ainsi que la concentration en polymère vivant. L'homme du métier sait faire varier ces différents paramètres

pour contrôler les conversions dans les différents réacteurs.

La température de chaque réacteur varie avantageusement de 20 à 150°C.

Le procédé selon l'invention permet d'obtenir en sortie du dernier réacteur à l'issue de l'étape a) un taux de chaînes vivantes supérieur ou égal à 90% en nombre par rapport au nombre total de chaînes vivantes initiées dans le réacteur r1. Toutefois, lorsqu'une solution est réinjectée comme expliqué précédemment, cette solution est avantageusement purifiée pour ne pas dégrader le polymère vivant.

Dans le cas d'une polymérisation anionique, la chaîne vivante est un carbanion. Le carbanion est une espèce très réactive. Il réagit avec des espèces protiques ou des espèces électrophiles.

Aussi si la charge du premier réacteur contient des impuretés protiques (alcools, eau, acides ...) ou électrophiles (carbonyles, ...), l'initiateur réagira d'abord avec ces impuretés pour conduire à des espèces inactives (alcoolates, ...) incapables d'initier la polymérisation des monomères. La différence entre la quantité d'initiateur introduit en entrée du réacteur r1 et la quantité d'initiateur ayant réagi avec les impuretés dans le réacteur r1 constitue la quantité d'initiateur actif. Le nombre de chaînes vivantes initiées dans le réacteur r1 est équivalent à cette quantité d'initiateur actif dans le réacteur r1.

De préférence, le nombre de réacteurs est égal à 2 ou 3, de préférence 2.

De préférence, la conversion massique C1 dans le réacteur r1 est inférieure à 65%, de préférence inférieure à 60%.

De préférence, la conversion massique totale Cn à la sortie du réacteur rn est supérieure ou égale à 80%, de préférence encore supérieure ou égale à 85%.

De préférence, le temps de séjour dans le réacteur ri, i variant de 1 à n, est compris entre 1 et 60 minutes, de préférence entre 5 et 60 minutes, de préférence encore entre 10 et 50 minutes. Il est calculé de la manière suivante :

$$\tau_i = \frac{V_i}{Q_{Vi}}$$

Avec :

- Vi, volume du réacteur ri, i variant de 1 à n
- QVi = débit volumique sortant du réacteur i.

Comme expliqué précédemment, selon un mode particulier, un ou plusieurs des réacteurs r2 à rn est en outre alimenté(s) par réinjection d'une solution, de préférence purifiée, comprenant du solvant et/ou des monomères et/ou de l'agent polaire.

Le carbanion polymère étant une espèce très réactive comme expliqué précédemment, la neutralisation des impuretés apportées par la réinjection se fera par le carbanion polymère. Cette neutralisation empêche la chaîne de polymère de continuer à se propager car la chaîne devient inactive envers la polymérisation mais également envers la fonctionnalisation. Cette espèce n'est donc plus réactive avec les agents de stoppage, fonctionnalisation, couplage ou étoilage éventuels.

C'est pourquoi, en dehors de la charge du premier réacteur, il peut être nécessaire de contrôler la pureté de chaque solution éventuellement réinjectée afin de contribuer à un taux de polymère mort en sortie du réacteur rn le plus faible possible, soit inférieur à 10% en nombre, par rapport au nombre total de chaînes initiées dans le réacteur r1.

Par pureté d'une solution réinjectée, on entend la proportion massique de monomère(s) éventuel, et de solvant éventuel et d'agent polaire éventuel, par rapport à la masse totale de la solution réinjectée.

L'étape de purification consiste à éliminer dans la solution réinjectée les composés protiques (eau, alcool, acides, ...) et électrophiles (carbonyle, ...) pouvant désactiver le bout de chaîne vivant de façon à diminuer leur quantité dans cette solution réinjectée à une teneur inférieure ou égale à 5 mol.% de l'initiateur actif, de préférence inférieure ou égale à 2 mol.% de l'initiateur actif. Par initiateur actif, on entend la quantité de produit de type amidure de lithium de départ utilisé comme initiateur et non pour neutraliser les impuretés.

Chaque solution réinjectée contient du solvant purifié si nécessaire et/ou des monomères purifiés si nécessaire et/ou de l'agent polaire purifié si nécessaire.

Le constituant ou chaque constituant de la ou des solutions réinjectées peut être, avant réinjection, purifié indépendamment par tout moyen de purification habituellement utilisé pour purifier les constituants, par exemple par adsorption, extraction liquide/liquide, extraction gaz/liquide ou distillation.

La solution à réinjecter, comprenant tout ou partie de l'ensemble de ses constituants, peut être, avant réinjection, purifiée par tout moyen de purification habituellement utilisé pour purifier les constituants, par exemple par adsorption, extraction liquide/liquide, extraction gaz/liquide ou distillation.

Par élastomère diénique, doit être compris de manière connue un (on entend un ou plusieurs) élastomère issu au

moins en partie (i.e., un homopolymère ou un copolymère) de monomères diènes (monomères porteurs de deux doubles liaisons carbone-carbone, conjuguées ou non). Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs monomères vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques.

A titre de diènes conjugués utilisables dans le procédé conforme à l'invention conviennent notamment le butadiène-1,3, le 2-méthyl-1,3-butadiène, les 2,3 di(alcoyle en $C_1$ à Cs)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène et le 2,4 hexadiène, etc.

A titre de monomères vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène et le vinylnaphtalène, etc.

L'élastomère diénique est choisi préférentiellement dans le groupe des élastomères diéniques fortement insaturés constitué par les polybutadiènes (BR), les polyisoprènes (IR) de synthèse, les copolymères de butadiène, en particulier les copolymères de butadiène et d'un monomère vinyl aromatique, les copolymères d'isoprène et les mélanges de ces élastomères. De tels copolymères sont plus particulièrement des copolymères de butadiène-styrène (SBR), des copolymères d'isoprène-butadiène (BIR), des copolymères d'isoprène-styrène (SIR) et des copolymères d'isoprène-butadiène-styrène (SBIR). Parmi ces copolymères, les copolymères de butadiène-styrène (SBR) sont particulièrement préférés.

L'élastomère diénique est préparé par polymérisation anionique en présence d'un initiateur de polymérisation amidure de lithium compris dans la solution d'entrée.

Les amidures de lithium sont les produits de la réaction d'un composé organolithien, de préférence alkyllithien, et d'une amine secondaire acyclique ou cyclique, de préférence cyclique.

A titre d'amine secondaire utilisable pour préparer les initiateurs, on peut citer la diméthylamine, diéthylamine, dipropylamine, di-n-butylamine, di-sec-butylamine, dipentylamine, dihexylamine, di-n-octylamine, di-(2-ethylhexyl) amine, di-cyclohexylamine, N-méthylbenzylamine, diallylamine, morpholine, piperazine, 2,6-diméthylmorpholine, 2,6-diméthylpiperazine, 1-éthylpiperazine, 2-méthylpipérazine, 1-benzylpiperazine, pipéridine, 3,3-diméthylpipéridine, 2,6-diméthylpipéridine, 1-méthyl-4-(méthylamino)pipéridine, 2,2,6,6-tetraméthylpipéridine, pyrrolidine, 2,5-diméthylpyrrolidine, azetidine, hexaméthylèneimine, heptaméthylèneimine, 5-benzyloxyindole, 3-azaspiro[5,5]undecane, 3-aza-bicycle[3.2.2]nonane, carbazole, bistriméthylsilylamine, la pyrrolidine et l'hexaméthylèneimine.

L'amine secondaire, lorsqu'elle est cyclique, est de préférence choisie parmi la pyrrolidine et l'hexaméthylèneimine.

Le composé alkyllithien est de préférence l'éthyllithium, le n-butyllithium (n-BuLi), l'isobutyllithium, etc.

La polymérisation est effectuée en présence d'un solvant compris dans la solution d'entrée.

Le solvant utilisé dans le procédé selon l'invention est de préférence un solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène.

Comme expliqué précédemment, la solution d'entrée, ainsi qu'éventuellement l'une ou plusieurs des solutions réinjectées, utilisée(s) dans le procédé selon l'invention comprend/comprennent un agent polaire.

À titre d'agents polaires chélatants utilisables dans le procédé conforme à l'invention conviennent notamment les agents comprenant au moins une fonction amine tertiaire ou au moins une fonction éther et préférentiellement des agents de type tétrahydrofurfuryle éthyle éther ou tétraméthyle éthylènediamine.

Selon l'invention, l'élastomère diénique vivant compris dans le flux en sortie du réacteur de polymérisation rn est ensuite mis à réagir avec au moins un agent de fonctionnalisation, de couplage ou d'étoilage, tel que défini ci-avant, et qui permet d'introduire dans l'élastomère un groupement fonctionnel comprenant au moins un atome de silicium directement relié à la chaîne élastomère.

L'agent de fonctionnalisation, de couplage ou d'étoilage selon l'invention est au moins un composé répondant à la formule (II) :

$$SiR4_p(OR')_{4-p-q}(R3\text{-}X)_q, \qquad \text{Formule (II)}$$

dans laquelle,

- R3 est un radical hydrocarboné divalent aliphatique, saturé ou non, cyclique ou non, en $C_1$-$C_{18}$, aromatique en $C_6$-$C_{18}$, de préférence un radical hydrocarboné divalent, linéaire ou ramifié, aliphatique, plus préférentiellement un radical hydrocarboné divalent linéaire aliphatique, plus préférentiellement encore le radical hydrocarboné linéaire en $C_2$ ou $C_3$ ;

- X est un atome d'hydrogène ou une fonction susceptible d'interagir avec une charge renforçante comprenant au moins un hétéroatome choisi parmi N, S, O, P ;
- les radicaux R', substitués ou non substitués, identiques ou différents, représentent un groupe alkyle en $C_1$-$C_{10}$, voire en $C_1$-$C_8$, de préférence un groupe alkyle en $C_1$-$C_4$, plus préférentiellement méthyle et éthyle ;
- les radicaux R4, substitués ou non substitués, identiques ou différents, représentent un groupe alkyle en $C_1$-$C_{10}$, voire en $C_1$-$C_8$ ;
- p représente un nombre entier de valeur allant de 0 à 2, q représente un nombre entier de valeur 0 ou 1, sous réserve que $p+q \leq 2$.

Les différents aspects concernant la formule (II), préférentiels ou non, qui précèdent sont combinables entre eux.

Selon des variantes de l'invention, l'agent de fonctionnalisation de formule (II) ne comporte pas d'autre fonction que celle comprenant l'atome de silicium de type alcoxysilane. Il s'agit alors d'un tétraalcoxysilane, d'un monoalkyl trialcoxysilane, ou d'un dialkyl dialcoxysilane.

Selon d'autres variantes de l'invention, l'agent de fonctionnalisation de formule (II) comporte une fonction autre que la fonction comprenant l'atome de silicium, notamment susceptible d'interagir avec une charge renforçante. Cette dénomination n'exclut toutefois pas la possibilité pour la fonction comprenant l'atome de silicium d'interagir également avec une charge renforçante.

Par fonction susceptible d'interagir avec une charge renforçante, on entend de préférence des fonctions comprenant au moins un hétéroatome choisi parmi N, S, O, P. On peut, à titre d'exemple, citer parmi ces fonctions les amines primaires protégées ou non, secondaires protégées ou non ou tertiaires, cycliques ou non, les isocyanates, les imines, les cyano, la fonction thiol protégée ou non, les carboxylates, les époxydes, les phosphines primaires protégées ou non, secondaires protégées ou non ou tertiaires.

Ainsi, selon des variantes de l'invention, la fonction susceptible d'interagir avec une charge renforçante est une amine primaire, protégée ou non, secondaire, protégée ou non, ou tertiaire. L'atome d'azote peut alors être substitué par deux groupements, identiques ou différents, pouvant être un radical trialkyl silyl, le groupement alkyle ayant 1 à 4 atomes de carbone, ou un radical alkyle en C1-C10, de préférence alkyle en C1-C4, plus préférentiellement un radical méthyle ou éthyle, ou alors les deux substituants de l'azote forment avec celui-ci un hétérocycle contenant un atome d'azote et au moins un atome de carbone, de préférence de 2 à 6 atomes de carbone,

On peut citer par exemple à titre d'agent de fonctionnalisation dont la fonction susceptible d'interagir avec une charge renforçante est une amine, les (N,N-dialkylaminopropyl)trialcoxysilanes, les (N,N-dialkylaminopropyl)alkyldialcoxysilanes, les (N-alkylaminopropyl)trialcoxysilanes et les (N-alkylaminopropyl)alkyldialcoxysilanes dont la fonction amine secondaire est protégée par un groupement trialkyl silyl et les aminopropyltrialcoxysilanes et les aminopropylalkydialcoxysilanes dont la fonction amine primaire est protégée par deux groupements trialkyl silyl. Les substituants alkyle présents sur l'atome d'azote sont linéaires ou ramifiés et possèdent avantageusement de 1 à 10 atomes de carbone, de préférence 1 à 4, plus préférentiellement 1 ou 2. Par exemple, conviennent à titre de substituants alkyles les groupements méthylamino-, diméthylamino-, éthylamino-, diéthylamino, propylamino-, dipropylamino-, butylamino-, dibutylamino-, pentylamino-, dipentylamino, hexylamino, dihexylamino, hexaméthylèneamino, de préférence les groupements diéthylamino et diméthylamino. Les substituants alcoxy sont linéaires ou ramifiés et possèdent généralement de 1 à 10 atomes de carbone, voire 1 à 8, de préférence de 1 à 4, plus préférentiellement 1 ou 2.

Préférentiellement, l'agent de fonctionnalisation peut être choisi parmi les 3-(N,N-dialkylaminopropyl)trialcoxysilanes et les 3-(N,N-dialkylaminopropyl)alkyldialcoxysilanes, le groupement alkyl sur l'atome de silicium étant le groupement méthyl ou éthyl et le groupement alcoxy étant le groupement méthoxy ou éthoxy.

Préférentiellement, l'agent de fonctionnalisation peut être choisi parmi les 3-(N,N-alkyltriméthylsilylaminopropyl) trialcoxysilanes et les 3-(N,N-alkyltriméthylsilylaminopropyl)alkyldialcoxysilanes, le groupement alkyl sur l'atome de silicium étant le groupement méthyl ou éthyl et le groupement alcoxy étant le groupement méthoxy ou éthoxy.

Préférentiellement, l'agent de fonctionnalisation peut être choisi parmi les 3-(N,N-bistriméthylsilylaminopropyl) trialcoxysilanes et les 3-(N,N-bistriméthylsilylaminopropyl)alkyldialcoxysilanes, le groupement alkyl sur l'atome de silicium étant le groupement méthyl ou éthyl et le groupement alcoxy étant le groupement méthoxy ou éthoxy.

Selon des variantes de l'invention, la fonction susceptible d'interagir avec une charge renforçante est une fonction isocyanate. Préférentiellement, l'agent de fonctionnalisation peut être choisi parmi les 3-(isocyanatopropyl) trialcoxysilanes et les 3-(isocyanatopropyl)alkyldialcoxysilanes, le groupement alkyl étant le groupement méthyl ou éthyl et le groupement alcoxy étant le groupement méthoxy ou éthoxy.

Selon des variantes de l'invention, la fonction susceptible d'interagir avec une charge renforçante est une fonction imine. Préférentiellement, l'agent de fonctionnalisation peut être choisi parmi le N-(1,3-diméthylbutylidène)-3-(triméthoxysilyl)-1-propanamine, le N-(1,3-diméthylbutylidène)-3-(triéthoxysilyl)-1-propanamine, le N-(1,3-méthyléthylidène)-3-(triméthoxysilyl)-1-propanamine, le N-(1,3-méthyléthylidène)-3-(triéthoxysilyl)-1-propanamine, le N-ethylidène-3-(triméthoxysilyl)-1-propanamine, le N-ethylidène-3-(triéthoxysilyl)-1-propanamine, le N-(1-méthylpropylidène)-3-(triméthoxysilyl)-1-propanamine, le N-(1-méthylpropylidène)-3-(triéthoxysilyl)-1-propanamine, le N-(4-N,N-diméthylaminobenzylidène)-3-(triméthoxysilyl)-1-propanamine, le N-(4-N,N-diméthylaminobenzylidène)-3-(triéthoxysilyl)-1-propanamine, le N-(cyclohexylidène)-3-(triméthoxysilyl)-1-propanamine, le N-(cyclohexylidène)-3-(triéthoxysilyl)-1-propanamine, le N-(3-triméthoxysilylpropyl)-4,5-dihydroimidazole, le N-(3-triéthoxysilylpropyl)-4,5-dihydroimidazole, le N-(3-triméthoxysilylpropyl)-4,5-imidazole et le N-(3-triéthoxysilylpropyl)-4,5-imidazole.

Selon des variantes de l'invention, la fonction susceptible d'interagir avec une charge renforçante est une fonction cyano. Préférentiellement, l'agent de fonctionnalisation peut être choisi parmi les 3-(cyanopropyl)trialcoxysilanes et les 3-(cyanopropyl)alkyldialcoxysilanes, le groupement alkyl étant le groupement méthyl ou éthyl et le groupement alcoxy étant le groupement méthoxy ou éthoxy.

Selon des variantes de l'invention, la fonction susceptible d'interagir avec une charge renforçante est une fonction thiol, protégée ou non. On peut citer à titre d'exemple les (S-trialkylsilylmercaptopropyl)trialcoxysilanes, les (S-trialkylsilylmercaptopropyl)alkyldialcoxysilanes, les (S-trialkylsilylmercaptoéthyl)trialcoxysilanes et les (S-trialkylsilylmercaptoéthyl)alkyldialcoxysilanes, le groupement alkyl sur l'atome de silicium porteur des groupements alcoxysilanes étant le groupement méthyl ou éthyl et le groupement alcoxy étant le groupement méthoxy ou éthoxy. Le groupement alkyl sur le silicium lié à l'atome de soufre est le groupement méthyl ou tert-butyl.

Selon des variantes de l'invention, la fonction susceptible d'interagir avec une charge renforçante est une fonction carboxylate. A titre de fonction carboxylate, on peut citer les acrylates ou les méthacrylates. Une telle fonction est de préférence un méthacrylate. Préférentiellement, l'agent de fonctionnalisation peut être choisi parmi les 3-(méthacryloyloxypropyl)trialcoxysilanes et les 3-(méthacryloyloxypropyl)alkyldialcoxysilanes le groupement alkyl étant le groupement méthyl ou éthyl et le groupement alcoxy étant le groupement méthoxy ou éthoxy.

Selon des variantes de l'invention, la fonction susceptible d'interagir avec une charge renforçante est une fonction époxyde. Préférentiellement, l'agent de fonctionnalisation peut être choisi parmi les 3-(glycidyloxypropyl) trialcoxysilanes et les 3-(glycidyloxypropyl)alkyldialcoxysilanes le groupement alkyl étant le groupement méthyl ou éthyl et le groupement alcoxy étant le groupement méthoxy ou éthoxy.

Selon des variantes de l'invention, la fonction susceptible d'interagir avec une charge renforçante est une fonction phosphine primaire, protégée ou non, secondaire, protégée ou non, ou tertiaire. Préférentiellement, l'agent de fonctionnalisation peut être choisi parmi les 3-(P,P-bistriméthylsilylphosphinopropyl)trialcoxysilanes, les 3-(P,P-bistriméthylsilylphosphinopropyl)alkyldialcoxysilanes, les 3-(P,P-alkyltriméthylsilylphosphinopropyl)trialcoxysilanes, les 3-(P,P-alkyltriméthylsilylphosphinopropyl)alkyldialcoxysilanes, les 3-(P,P-dialkylphosphinopropyl)trialcoxysilanes et les 3-(P,P-dialkylphosphinopropyl)alkyldialcoxysilanes, le groupement alkyl sur l'atome de phosphore étant le groupement méthyl, éthyl ou phényl, le groupement alkyl sur l'atome de silicium étant le groupement méthyl ou éthyl et le groupement alcoxy étant le groupement méthoxy ou éthoxy.

Les différents aspects, préférentiels ou non, qui précèdent et qui concernent l'agent de fonctionnalisation de formule (II), notamment quant à la nature de l'autre fonction susceptible d'interagir avec la charge renforçante, la nature du groupement espaceur R3 et la nature du groupe alcoxysilane sont combinables entre eux. Selon le procédé de l'invention, on peut utiliser un seul agent de fonctionnalisation, de couplage ou d'étoilage à base de silicium, tel que défini ci-avant, ou un mélange d'au moins deux de ces agents.

L'agent de fonctionnalisation, de couplage ou d'étoilage à base de silicium est avantageusement en solution dans un solvant compatible avec celui compris dans le flux issu du réacteur de polymérisation rn et alimentant le dispositif de fonctionnalisation. Par solvant compatible, on entend généralement solvant miscible avec le solvant de polymérisation. Préférentiellement, ce solvant est identique au solvant de polymérisation.

L'agent de fonctionnalisation, de couplage ou d'étoilage à base de silicium est ajouté dans des proportions telles que le rapport molaire de cet agent de fonctionnalisation, de couplage ou d'étoilage à base de silicium à l'initiateur de polymérisation dépend essentiellement du type d'élastomère diénique modifié voulu et du nombre de sites de l'agent de fonctionnalisation, de couplage ou d'étoilage réactifs vis-à-vis de l'élastomère vivant. Par sites réactifs, on entend essentiellement dans le cadre de l'invention des liaisons Si-OR dans la formule (II).

Ainsi, avec un rapport allant de 0,40 à 0,75, préférentiellement de 0,45 à 0,65 et encore plus préférentiellement de 0,45 à 0,55, on privilégie la formation d'espèces couplées au sein de l'élastomère modifié si l'agent de formule (II) possède au moins deux sites réactifs vis-à-vis de l'élastomère vivant. De la même manière, avec un rapport allant de 0,15 à 0,40, préférentiellement de 0,20 à 0,35, on forme majoritairement des espèces étoilées (3 et/ou 4 branches) au sein de l'élastomère modifié si l'agent de formule (II) possède au moins trois sites réactifs vis-à-vis de l'élastomère vivant. Avec un rapport supérieur ou égal à 0,75, préférentiellement supérieur à 1, on forme majoritairement des espèces fonctionnalisées en bout de chaîne si l'agent possède au moins un site réactif vis-à-vis de l'élastomère vivant. Avec un excès d'agent de formule (II), notamment avec un rapport molaire de cet agent de fonctionnalisation à l'initiateur d'au moins 2, les taux d'espèces autres que les espèces fonctionnalisées en bout de chaîne sont négligeables.

Le rapport molaire de cet agent de fonctionnalisation à base de silicium à l'initiateur de polymérisation définit uniquement les proportions de chaînes fonctionnalisées en bout de chaîne et de chaînes non fonctionnelles dans l'élastomère modifié.

L'agent de fonctionnalisation, de couplage ou d'étoilage à base de silicium est avantageusement injecté en

continu de manière homogène dans un dispositif de fonctionnalisation alimenté en entrée du dispositif par le flux en sortie du réacteur de polymérisation rn comprenant l'élastomère diénique vivant porteur d'un site actif. On entend par dispositif de fonctionnalisation, un ou plusieurs réacteurs en série. Ces réacteurs peuvent être de nature identique ou différente, notamment tubulaire, tubulaire avec dispersion axiale, agité ou supposé parfaitement agité. L'injection en continu d'au moins un agent de fonctionnalisation, de couplage ou d'étoilage s'effectue dans au moins un de ces réacteurs.

Le temps de séjour dans chaque réacteur tubulaire, ou tubulaire à dispersion axiale est de préférence compris entre 0 et 120 minutes, notamment entre 0,1 et 60 minutes, plus préférentiellement entre 0,1 et 5 minutes.

Le temps de séjour dans chaque réacteur continu parfaitement agité ou réacteur agité, est de préférence compris entre 0 et 60 minutes, plus préférentiellement entre 5 et 50 minutes.

La température de fonctionnalisation varie généralement de 30 à 150°C. De préférence, la température de fonctionnalisation est égale à la température au sein du réacteur de polymérisation qui précède immédiatement le dispositif de fonctionnalisation.

Avec l'agent de fonctionnalisation, de couplage ou d'étoilage à base de silicium conforme à la formule (II), une mise en œuvre particulièrement avantageuse de l'invention consiste à utiliser un dispositif pour la fonctionnalisation de l'élastomère diénique vivant conforme à celui décrit dans la demande FR 3 009 556 A1, dont le contenu doit être considéré comme faisant partie de la présente demande. Il est ainsi possible de procéder de manière compétitive, économique et flexible, adaptable à une production industrielle à la synthèse d'élastomères diéniques modifiés avec une maîtrise de la répartition des espèces fonctionnelles (fonctionnalisée en bout de chaîne et/ou couplée et/ou étoilée) au sein de l'élastomère.

Le dispositif de fonctionnalisation de cette mise en œuvre avantageuse de l'invention avec l'agent de fonctionnalisation, de couplage ou d'étoilage à base de silicium conforme à la formule (II) peut avoir pour modèle l'un des modèles suivants:

- un réacteur tubulaire avec dispersion axiale, ou alternativement,
- un réacteur tubulaire avec dispersion axiale en série avec au moins un réacteur continu agité, supposé parfaitement agité, ou alternativement,
- au moins un réacteur tubulaire avec dispersion axiale, en série avec un réacteur continu agité, supposé parfaitement agité, ou alternativement,
- plusieurs réacteurs tubulaires avec dispersion axiale en série avec plusieurs réacteurs continus agités, supposés parfaitement agités, ou alternativement,
- au moins deux réacteurs continus agités, supposés parfaitement agités, en série.

Selon un mode de réalisation particulier, l'élastomère diénique vivant compris dans le flux en sortie du réacteur de polymérisation rn peut être mis à réagir avec au moins deux agents différents conformes à la formule (II). On peut citer par exemple la combinaison d'un trialcoxysilane et d'un alkyldialcoxysilane, porteurs chacun d'une fonction susceptible d'interagir avec une charge renforçante de préférence identique, celle-ci étant avantageusement choisie parmi les amines primaires protégées ou non, secondaires protégées ou non ou tertiaires, cycliques ou non, la fonction thiol protégée ou non.

Selon un autre mode de réalisation particulier, éventuellement combinable avec le mode de réalisation précédent, l'élastomère diénique vivant compris dans le flux en sortie du réacteur de polymérisation rn peut être mis à réagir avec en outre un agent de couplage ou d'étoilage à base de silicium ou d'étain. Parmi ceux-ci, on peut citer les dérivés de l'étain ou de silicium de formule $MR_xY_{4-x}$, M représente un atome Sn ou Si, x représente un nombre entier de valeur 0 à 2, de préférence de valeur 0 à 1, R représente un radical alkyle de 1 à 10 atomes de carbone, de préférence un radical alkyle ayant 1 à 4 atomes de carbone, et Y est un atome d'halogène, de préférence le chlore. On peut citer à titre d'exemple des composés tels que le tétrachlorure d'étain, le trichlorure de méthyl étain, le dichlorure de diméthyl étain, le tétrachlorosilane, le méthyltrichlorosilane et le diméthyldichlorosilane.

La réaction avec cet agent de couplage ou d'étoilage complémentaire peut se faire de manière connue en soi.

Selon l'invention, les aspects préférentiels de ce mode de réalisation particulier du procédé de synthèse de l'élastomère diénique modifié sont combinables avec les différents aspects, préférentiels ou non, des autres modes ou variantes de réalisation du procédé qu'il complète.

Le procédé de synthèse de l'élastomère diénique modifié selon l'invention peut se poursuivre de manière connue en soi.

Selon des variantes de l'invention, le procédé peut comprendre une étape de stoppage classique au moyen par exemple de méthanol ou d'eau.

Selon les variantes de l'invention selon lesquelles l'agent de fonctionnalisation est porteur d'une fonction amine primaire ou secondaire protégée, le procédé de synthèse peut se poursuivre par une étape de déprotection de l'amine primaire ou secondaire. Cette étape est mise en œuvre après la réaction de modification. On peut à titre d'exemple faire réagir les chaînes fonctionnalisées par le groupement amine protégé avec un acide, une base, un dérivé fluoré tel le

fluorure de tétrabutylammonium, un sel d'argent tel que le nitrate d'argent, etc... pour déprotéger cette fonction amine. Ces différentes méthodes sont décrites dans l'ouvrage « Protective Groups in Organic Synthesis, T. W. Green, P. G. M. Wuts, Third Edition,1999 ». Cette étape de déprotection peut avoir pour effet d'hydrolyser tout ou partie des fonctions alcoxysilanes hydrolysables de l'élastomère diénique modifié pour les transformer en fonctions silanol.

Selon les variantes de l'invention selon lesquelles l'agent de fonctionnalisation est porteur d'une fonction thiol protégée, le procédé de synthèse peut se poursuivre par une étape de déprotection du thiol. Cette étape est mise en œuvre après la réaction de modification. On peut à titre d'exemple faire réagir les chaînes fonctionnalisées par le groupement thiol protégé avec de l'eau, un alcool, ou un acide (acide chlorhydrique, acide sulfurique, acide carboxylique). Cette étape de déprotection peut avoir pour effet d'hydrolyser tout ou partie des fonctions alcoxysilanes hydrolysables de l'élastomère diénique modifié pour les transformer en fonctions silanol.

Selon les variantes de l'invention selon lesquelles l'agent de fonctionnalisation est porteur d'une fonction phosphine primaire ou secondaire protégée, le procédé de synthèse peut se poursuivre par une étape de déprotection de la phosphine. Cette étape est mise en œuvre après la réaction de modification. On peut à titre d'exemple faire réagir les chaînes fonctionnalisées par le groupement phosphine protégé avec de l'eau, un alcool, ou un acide (acide chlorhydrique, acide sulfurique, acide carboxylique). Cette étape de déprotection peut avoir pour effet d'hydrolyser tout ou partie des fonctions alcoxysilanes hydrolysables de l'élastomère diénique modifié pour les transformer en fonctions silanol.

Selon des variantes de l'invention, le procédé de synthèse peut comprendre une étape d'hydrolyse des fonctions alcoxysilanes hydrolysables, par adjonction d'un composé acide, basique ou neutre tel que décrit dans le document EP 2 266 819 A1. Les fonctions hydrolysables sont alors transformées en fonction silanol.

Le procédé de synthèse de l'élastomère diénique modifié selon l'invention peut se poursuivre de manière connue en soi par les étapes de récupération de l'élastomère modifié.

Selon des variantes de ce procédé, ces étapes comprennent une étape de stripping en vue de récupérer l'élastomère issu des étapes antérieures sous forme sèche. Cette étape de stripping peut avoir pour effet d'hydrolyser tout ou partie des fonctions hydrolysables de l'élastomère diénique modifié, notamment les fonctions alcoxysilanes hydrolysables les transformant en fonctions silanol. Au moins 50 à 70% molaire des fonctions hydrolysables peuvent ainsi être hydrolysées.

Les élastomères diéniques modifiés selon le procédé de l'invention, peuvent être avantageusement utilisés dans des compositions de caoutchouc en mélange avec un ou plusieurs autres composés. Du fait du taux élevé de fonctions, qu'elles soient issues de l'initiateur de polymérisation ou de la modification post-polymérisation, les élastomères diéniques ainsi modifiés sont particulièrement indiqués pour optimiser les interactions entre l'élastomère et la charge renforçante au sein d'une composition de caoutchouc renforcée, quelle que soit la nature de la charge renforçante.

Les caractéristiques précitées de la présente invention, ainsi que d'autres, seront mieux comprises à la lecture de la description suivante de plusieurs exemples de réalisation de l'invention, donnés à titre illustratif et non limitatif.

## Mesures et tests utilisés

### Conversion

Les conversions sont mesurées par pesées d'extrait sec de la solution contenant le polymère. Dans cette méthode, de la solution contenant le polymère est prélevée à la sortie du réacteur. Cette solution est introduite dans une barquette préalablement tarée. La masse de solution est ainsi pesée.

L'échantillon est séché à 140°C, sous la pression réduite de 200 mmHg pendant 15 minutes. La barquette est ensuite placée dans un dessiccateur contenant du gel de silice pendant 2 minutes. La pesée de la barquette permet alors de déterminer la masse de polymère de l'échantillon prélevé. On remonte alors via la concentration en monomères à la conversion à la sortie du réacteur.

$$C = \frac{\frac{m_{extrait\ sec}}{m_{échantillon}}}{\frac{\sum_1^n Mi}{\sum_1^n Qi}} . 100$$

avec

$$\sum_1^n Mi$$

qui représente la somme de toutes les entrées massiques en monomères dans le procédé total (réacteurs 1 à n)

$$\sum_1^n Qi$$

et

qui représente la somme de toutes les entrées massiques dans le procédé total (réacteurs 1 à n). *(Solvant, monomères, catalyseurs etc...),*

le rapport $\frac{\sum_1^n Mi}{\sum_1^n Qi}$ correspondant au % massique en monomères

Température de transition vitreuse

Dans ces exemples, les températures de transition vitreuse (Tg) des élastomères sont déterminées à l'aide d'un calorimètre différentiel ("differential scanning calorimeter").

Microstructure des élastomères

La microstructure des élastomères est caractérisée par la technique de spectroscopie proche infrarouge (NIR).

La spectroscopie proche infrarouge (NIR) est utilisée pour déterminer quantitativement le taux massique de styrène dans l'élastomère ainsi que sa microstructure (répartition relative des unités butadiène 1,2, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN $^{13}C$. Le taux de styrène et la microstructure sont alors calculés à partir du spectre NIR d'un film d'élastomère d'environ 730 $\mu m$ d'épaisseur. L'acquisition du spectre est réalisée en mode transmission entre 4000 et 6200 $cm^{-1}$ avec une résolution de 2 $cm^{-1}$, à l'aide d'un spectromètre proche infrarouge à transformée de Fourier Bruker Tensor 37 équipé d'un détecteur InGaAs refroidi par effet Peltier.

Masse molaire moyenne en nombre et indice de polymolécularité

La masse molaire moyenne en nombre et l'indice de polymolécularité du polymère sont déterminés à l'aide d'une SEC (chromatographie d'exclusion stérique).

La technique SEC (« Size Exclusion Chromatography ») permet de séparer les macromolécules en solution suivant leur taille à travers des colonnes remplies d'un gel poreux. Les macromolécules sont séparées suivant leur volume hydrodynamique, les plus volumineuses étant éluées en premier.

La SEC permet d'appréhender les masses molaires moyennes et les distributions des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

Il n'y a pas de traitement particulier de l'échantillon de polymère avant analyse. Celui-ci est simplement solubilisé dans le solvant d'élution à une concentration d'environ 1 $g.L^{-1}$. Puis la solution est filtrée sur filtre de porosité 0,45 $\mu m$ avant injection.

L'appareillage utilisé est une chaîne chromatographique "WATERS alliance". Le solvant d'élution est soit le tétrahydrofurane, soit le tétrahydrofurane + 1%vol. de diisopropylamine + 1%vol. de triéthylamine, le débit de 1 $mL.min^{-1}$, la température du système de 35° C et la durée d'analyse de 30 min. Un jeu de deux colonnes WATERS de dénomination commerciale "STYRAGEL HT6E" est utilisé. Le volume injecté de la solution de l'échantillon de polymère est 100 $\mu L$. Le détecteur est un réfractomètre différentiel "WATERS 2410" et le logiciel d'exploitation des données chromatographiques est le système "WATERS EMPOWER".

Les masses molaires moyennes calculées sont relatives à une courbe d'étalonnage réalisée pour des SBR de microstructure suivante : 28% massique de motifs type styrène, 18% massique de motifs type 1-2, 31% massique de motifs type 1-4 trans et 23% massique de motifs type 1-4 cis.

Taux de chaînes fonctionnalisées $(CH_3)_2SiOH$ en extrémité de chaîne

La détermination du taux de chaînes fonctionnalisées $(CH_3)_2SiOH$ en extrémité de chaîne est réalisée par analyse RMN.

La RMN 2D $^1H$-$^{29}Si$ permet de vérifier la nature de la fonction grâce aux valeurs de déplacements chimiques des noyaux silicium et des protons au voisinage $^2J$ (via 2 liaisons). Elle utilise une valeur de constante de couplage $^2J$ $^1H$-$^{29}Si$ de 8 Hz. Le déplacement chimique du silicium de l'espèce $SBR(CH_3)_2SiOH$ en extrémité de chaîne est d'environ 11-12 ppm.

La RMN 1H permet de quantifier les groupements méthyl portés par le silicium ($SiCH_3$) par intégration du signal correspondant, situé autour de $\delta$ = 0 ppm. Les échantillons sont solubilisés dans le sulfure de carbone ($CS_2$). 100 $\mu$L de cyclohexane deutéré ($C_6D_{12}$) sont ajoutés pour le signal de lock. Les analyses RMN sont réalisées sur un spectromètre 500 MHz BRUKER équipé d'une sonde « large bande » BBIz 5 mm. Pour l'expérience RMN $^1H$ quantitative, la séquence utilise une impulsion 30° et un délai de répétition de 2 secondes.

Ainsi, connaissant la quantité totale de chaînes par la valeur de Mn obtenue par analyse SEC, il est possible de déterminer le taux de chaînes fonctionnalisées $(CH_3)_2SiOH$ en extrémité de chaîne.

Taux de chaînes fonctionnalisées en extrémité de chaîne avec le composé 3-(N,N-diméthylaminopropyl)triméthoxysilane (DMAPTMS)

La détermination du taux de chaînes fonctionnalisées en extrémité de chaîne avec le composé 3-(N,N-diméthylaminopropyl)triméthoxysilane (DMAPTMS) est réalisée par analyse RMN.

Les spectres sont acquis sur un spectromètre BRUKER Avance III HD 500 MHz équipé d'une cryosonde « large bande » BBIz-grad mm. L'expérience RMN $^1H$ quantitative utilise une séquence simple impulsion 30° et un délai de répétition de 5 secondes entre chaque acquisition. 64 à 256 accumulations sont réalisées.

Les expériences bidimensionnelles $^1H/^{13}C$ et $^1H/^{29}Si$ sont utilisées dans le but de déterminer la structure des polymères fonctionnels.

Les échantillons sont solubilisés dans du disulfure de carbone ($CS_2$). 100 $\mu$L de cyclohexane deutéré sont ajoutés à la solution pour le Lock.

La structure chimique finale du polymère fonctionnel est identifiée par RMN $^1H$, $^{13}C$ et $^{29}Si$.

Le spectre RMN 1D $^1H$ enregistré dans des conditions quantitatives permet de calculer le taux de 3-(N,N-diméthylaminopropyl)triméthoxysilane greffé sur le polymère. Les signaux caractéristiques de la fonction greffée sont observables à des déplacements chimiques $^1H$ situés entre 3,25 ppm et 3,40 ppm pour le groupement méthoxy ($Si-OCH_3$) et 0,58 ppm à 0,35 ppm pour le motif méthylène en alpha du silicium ($Si-CH_2-R$). La quantification du taux de fonction est réalisée à partir de l'intégration des signaux RMN des protons méthylène en alpha du silicium.

La position de la fonction sur le polymère est confirmée par une carte de corrélation bidimensionnelle $^1H/^{29}Si$. Les signaux RMN $^{29}Si$ du 3-(N,N-diméthylaminopropyl)triméthoxysilane greffé en extrémité de la chaîne polymère correspondent à un massif dont le déplacement chimique est compris entre - 10 ppm et - 8 ppm. Les signaux RMN $^{29}Si$ du 3-(N,N-diméthylaminopropyl)triméthoxysilane greffé au milieu de la chaîne polymère correspondent à un massif dont le déplacement chimique est compris entre 10 ppm et 9 ppm.

Ainsi, connaissant la quantité totale de chaînes par la valeur de Mn obtenue par analyse SEC, il est possible de déterminer le taux de chaînes fonctionnalisées 3-(N,N-diméthylaminopropyl)triméthoxysilane en extrémité de chaîne.

Taux de chaînes initiées hexaméthylèneimine (HMN)

La détermination du taux de chaînes initiées hexaméthylèneimine (HMN) est réalisée par analyse RMN.

Les échantillons (environ 200 mg) sont solubilisés dans environ 1 mL de disulfure de carbone ($CS_2$). 100 $\mu$L de cyclohexane deutéré ($C_6D_{12}$) sont ajoutés à la solution pour le lock du spectromètre.

Les spectres sont acquis sur un spectromètre Avance 500 MHz BRUKER équipé d'une cryosonde « large bande » BBIz-grad 5 mm.

L'expérience RMN $^1H$ quantitative utilise une séquence simple impulsion 30° et un délai de répétition de 5 secondes entre chaque acquisition. 64 à 1024 accumulations sont réalisées. Des expériences bidimensionnelles $^1H/^{13}C$ ont été réalisées pour déterminer la structure des polymères fonctionnels. Les déplacements chimiques proton sont calibrés par rapport à l'impureté protonnée du $CS_2$ à 7,18 ppm.

Dans le cas d'un homopolymère de butadiène, soit un polybutadiène, la mesure RMN 1D $^1H$ simple impulsion

quantitative permet d'observer deux massifs (2,8 ppm à 3,0 ppm et 2,3 ppm à 2,5 ppm) correspondant respectivement aux protons 1 et 2.

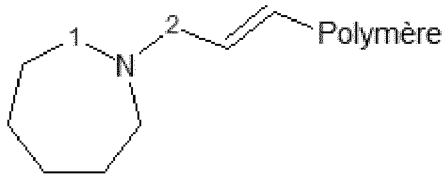

L'intégration des protons 2 permet d'estimer la quantité de motifs HMN greffés sur un butadiène 1,4 et l'intégration des protons 1 permet d'estimer la quantité totale de motifs HMN greffés sur les chaînes polybutadiène.

Dans le cas d'un copolymère de butadiène et de styrène, la mesure RMN 1D $^1$H simple impulsion quantitative permet d'observer un seul massif (2,8 ppm à 3,0 ppm) correspondant aux protons 2. L'intégration des protons 2 permet d'estimer la quantité de motifs HMN greffés sur un butadiène 1,4 uniquement. Le signal des protons 1 est masqué par le signal aliphatique de la matrice SBR. Dans le cas d'un SBR, seule la quantité de motifs HMN greffés à un butadiène 1,4 peut donc être estimée.

Ainsi, connaissant la quantité totale de chaînes par la valeur de Mn obtenue par analyse SEC, il est possible de déterminer le taux de chaînes initiées HMN (seuls les motifs HMN liés à une unité butadiène 1,4 sont quantifiables dans le cas de copolymères de butadiène et de styrène).

<u>Exemples de préparation d'élastomères</u>

Dans une installation pilote de polymérisation continue contenant un ou plusieurs réacteurs continus agités, supposés parfaitement agités selon l'homme l'art, sont introduits en continu du méthylcyclohexane, du butadiène, du styrène et du tétrahydrofurfuryl éthyle éther selon les proportions décrites dans chaque exemple. Du n-butyllithium est introduit en quantité suffisante afin de neutraliser les impuretés protiques apportées par les différents constituants présents dans l'entrée de ligne puis de l'hexaméthyleneimine lithiée est introduit afin d'initier les chaînes polymère. La synthèse de l'héxaméthylèneimine lithiée est réalisée in situ en continu par réaction d'un équivalent d'hexaméthylèneimine et 1,02 équivalent de butyl lithium dans un réacteur parfaitement agité.

Les temps de séjour et les concentrations indiqués en exemple sont calculés à partir des débits des différents constituants entrant dans le procédé de polymérisation.

Pour les exemples A, B, D, E et G, on effectue un prélèvement en sortie du réacteur rn pour déterminer l'indice de polymolécularité du polymère avant modification. Le prélèvement de polymère vivant est stoppé par introduction de méthanol en large excès molaire par rapport à l'initiateur. L'indice de polymolécularité est alors mesuré par chromatographie d'exclusion stérique.

Par ailleurs, en sortie du réacteur rn, le flux élastomère vivant est introduit en continu dans un réacteur tubulaire à dispersion axiale approvisionné en continu par un excès d'hexaméthylcyclotrisiloxane dans du cyclohexane pour fonctionnaliser le polymère vivant.

Pour les exemples C et F on effectue un prélèvement en sortie du réacteur rn pour déterminer l'indice de polymolécularité du polymère avant modification. Le prélèvement de polymère vivant est stoppé par introduction de méthanol en large excès molaire par rapport à l'initiateur. L'indice de polymolécularité est alors mesuré par chromatographie d'exclusion stérique.

Par ailleurs, en sortie du réacteur rn, le flux d'élastomère vivant est introduit en continu dans un réacteur tubulaire à dispersion axiale approvisionné en continu par un excès de 3-(N,N-diméthylaminopropyl)triméthoxysilane en solution dans le méthylcyclohexane (rapport molaire n(DMAPTMS) / n(polymère vivant) = 2) pour fonctionnaliser l'élastomère en extrémité de chaîne.

**Exemple A** - Comparatif - Procédé continu à 1 réacteur et fonctionnalisation des chaînes avec l'hexaméthylcyclotrisiloxane

Une synthèse de polymère butadiène/styrène est effectuée selon un procédé comparatif utilisant 1 seul réacteur agité, supposé parfaitement agité.

Les conditions opératoires sont précisées dans le tableau 1.

Tableau 1

| Conditions opératoires | Valeur | Unité | Réacteur |
|---|---|---|---|
| Nombre réacteurs | 1 | - | - |
| Volume des réacteurs | 14 | L | 1 |
| %Styrène (1) | 33 | % | 1 |
| %massique monomères (2) | 12 | % | 1 |
| Agent polaire (tétrahydrofurf uryl éthyle éther) | $3{,}51.10^{-4}$ | Mol/L | 1 |
| Initiateur actif (hexaméthyl èneimine lithiée) | $6{,}45.10^{-4}$ | Mol/L | 1 |
| Temps de séjour | 30 | Min | 1 |
| Température | 90 | °C | 1 |
| Conversion massique (3) | 86 | % | 1 |
| (1) en poids par rapport à la somme de toutes les entrées massiques en monomères du procédé<br>(2) en poids par rapport à la somme de toutes les entrées massiques du procédé<br>(3) conversion massique en monomères dans le réacteur | | | |

Les caractéristiques du polymère obtenu en sortie du réacteur sont données dans le tableau 2.

Tableau 2

| | | |
|---|---|---|
| Taux vinyl (4) | 25,5 | % |
| Taux styrène (5) | 28 | % |
| Tg | -45 | °C |
| Ip | 2,0 | - |
| Mn | 124,0 | kg/mol |
| Quantité de fonctions HMN | 6,0 | mmol/kg |
| Taux chaînes initiées HMN (6) | 75 | % |
| Quantité de fonctions $(CH_3)_2SiOH$ | 4,3 | mmol/kg |
| Taux chaînes fonctionnalisées $(CH_3)_2SiOH$ (7) | 54 | % |
| (4) en poids par rapport aux unités butadiène présentes dans les chaînes polymère<br>(5) en poids par rapport aux unités butadiène et styrène<br>(6) rapport molaire entre la quantité de fonctions HMN déterminée par RMN et le nombre de bouts de chaîne calculé à partir de la valeur de Mn mesurée sur l'élastomère récupéré à l'issue de l'étape de fonctionnalisation avec l'hexaméthylcyclotrisiloxane.<br>(7) rapport molaire entre la quantité de fonctions $(CH_3)_2SiOH$ déterminée par RMN et le nombre de bouts de chaîne calculé à partir de la valeur de Mn mesurée sur l'élastomère récupéré à l'issue de l'étape de fonctionnalisation avec l'hexaméthylcyclotrisiloxane. | | |

**Exemple B** - Selon l'invention - Procédé continu à 2 réacteurs en série avec 50 % conversion dans le 1er réacteur et fonctionnalisation des chaînes avec l'hexaméthylcyclotrisiloxane

Une synthèse de polymère styrène/butadiène est effectuée selon un procédé selon l'invention utilisant 2 réacteurs agités, supposés parfaitement agités en série.

Les conditions opératoires sont précisées dans le tableau 3.

Tableau 3

| Conditions opératoires | Valeur | Unité | Réacteur |
|---|---|---|---|
| Nombre réacteurs | 2 | - | - |

(suite)

| Conditions opératoires | Valeur | Unité | Réacteur |
|---|---|---|---|
| Volume des réacteurs | 14 | L | 1 |
| | 14 | | 2 |
| %Styrène (1) | 38 | % | 1 |
| %massique monomères (2) | 12 | % | 1 |
| Agent polaire (tétrahydrofurfuryl éthyle éther) | $8{,}8.10^{-5}$ | Mol/L | 1 |
| Initiateur actif (hexaméthylèneimine lithiée) | $5{,}43.10^{-4}$ | Mol/L | 1 |
| Temps de séjour | 30 | Min | 1 |
| | 30 | Min | 2 |
| Température | 55 | °C | 1 |
| | 75 | °C | 2 |
| Conversion massique (3) | 45 | % | 1 |
| | 88 | % | 2 |
| (1) en poids par rapport à la somme de toutes les entrées massiques en monomères du procédé<br>(2) en poids par rapport à la somme de toutes les entrées massiques du procédé<br>(3) conversion massique en monomères en sortie duréacteur | | | |

Les caractéristiques du polymère obtenu en sortie du réacteur 2 sont données dans le tableau 4.

Tableau 4

| | | |
|---|---|---|
| Taux vinyl (4) | 25 | % |
| Taux styrène (5) | 28 | % |
| Tg | -45 | °C |
| Mn | 150,5 | kg/mol |
| IP | 1,6 | - |
| Quantité fonctions HMN | 4,9 | mmol/kg |
| Taux chaînes initiées HMN (6) | 73 | % |
| Quantité fonctions $(CH_3)_2SiOH$ | 6,5 | mmol/kg |
| Taux chaînes fonctionnalisées $(CH_3)_2SiOH$ (7) | 97 | % |
| (4) en poids par rapport aux unités butadiène présentes dans les chaînes polymère<br>(5) en poids par rapport aux unités butadiène et styrène<br>(6) rapport molaire entre la quantité de fonctions HMN déterminée par RMN et le nombre de bouts de chaîne calculé à partir de la valeur de Mn mesurée sur l'élastomère récupéré à l'issue de l'étape de fonctionnalisation avec l'hexaméthylcyclotrisiloxane.<br>(7) rapport molaire entre la quantité de fonctions $(CH_3)_2SiOH$ déterminée par RMN et le nombre de bouts de chaîne calculé à partir de la valeur de Mn mesurée sur l'élastomère récupéré à l'issue de l'étape de fonctionnalisation avec l'hexaméthylcyclotrisiloxane. | | |

Ainsi, cet exemple montre qu'il est possible d'obtenir concomitamment avec le procédé continu selon l'invention une conversion élevée et un taux de chaînes fonctionnalisées élevé.

**Exemple C** - Selon l'invention - Procédé continu à 2 réacteurs en série avec 50 % conversion dans le 1$^{er}$ réacteur et fonctionnalisation des chaînes avec le 3-(N,N-diméthylaminopropyl)triméthoxysilane

Une synthèse de polymère styrène/butadiène est effectuée selon un procédé selon l'invention utilisant 2 réacteurs agités, supposés parfaitement agités en série.

Les conditions opératoires sont précisées dans le tableau 5.

Tableau 5

| Conditions opératoires | Valeur | Unité | Réacteur |
|---|---|---|---|
| Nombre réacteurs | 2 | - | - |
| Volume des réacteurs | 14 | L | 1 |
| | 14 | | 2 |
| %Styrène (1) | 38 | % | 1 |
| %massique monomères (2) | 12 | % | 1 |
| Agent polaire (tétrahydrofurfuryl éthyle éther) | $8{,}8.10^{-5}$ | Mol/L | 1 |
| Initiateur actif (hexaméthylèneimine lithiée) | $5{,}43.10^{-4}$ | Mol/L | 1 |
| Temps de séjour | 30 | Min | 1 |
| | 30 | Min | 2 |
| Température | 55 | °C | 1 |
| | 75 | °C | 2 |
| Conversion massique (3) | 45 | % | 1 |
| | 88 | % | 2 |
| (1) en poids par rapport à la somme de toutes les entrées massiques en monomères du procédé<br>(2) en poids par rapport à la somme de toutes les entrées massiques du procédé<br>(3) conversion massique en monomères en sortie du réacteur | | | |

Les caractéristiques du polymère obtenu en sortie du réacteur 2 sont données dans le tableau 6.

Tableau 6

| | | |
|---|---|---|
| Taux vinyl (4) | 25 | % |
| Taux styrène (5) | 28 | % |
| Tg | -45 | °C |
| Mn | 148,5 | kg/mol |
| IP | 1,6 | - |
| Quantité fonctions HMN | 4,8 | mmol/kg |
| Taux chaînes initiées HMN (6) | 72 | % |
| Quantité fonctions DMAPTMS | 6,5 | mmol/kg |
| Taux chaînes fonctionnalisées DMAPTMS (7) | 95 | % |
| (4) en poids par rapport aux unités butadiène présentes dans les chaînes polymère<br>(5) en poids par rapport aux unités butadiène et styrène<br>(6) rapport molaire entre la quantité de fonctions HMN déterminée par RMN et le nombre de bouts de chaîne calculé à partir de la valeur de Mn mesurée sur l'élastomère récupéré à l'issue de l'étape de fonctionnalisation avec le DMAPTMS.<br>(7) rapport molaire entre la quantité de fonctions DMPATMS déterminée par RMN et le nombre de bouts de chaîne calculé à partir de la valeur de Mn mesurée sur l'élastomère récupéré à l'issue de l'étape de fonctionnalisation avec le DMAPTMS. | | |

Ainsi, cet exemple montre qu'il est possible d'obtenir concomitamment avec le procédé continu selon l'invention une conversion élevée et un taux de chaînes fonctionnalisées élevé.

**Exemple D** - Comparatif - Procédé continu à 2 réacteurs en série avec conversion de 75% dans le 1er réacteur et fonctionnalisation des chaînes avec l'hexaméthylcyclotrisiloxane

Une synthèse de polymère styrène/butadiène est effectuée selon un procédé selon l'invention utilisant 2 réacteurs agités, supposés parfaitement agités en série.

Les conditions opératoires sont précisées dans le tableau 7.

Tableau 7

| Conditions opératoires | Valeur | Unité | Réacteur |
|---|---|---|---|
| Nombre réacteurs | 2 | - | - |
| Volume des réacteurs | 14 | L | 1 |
| | 14 | | 2 |
| %Styrène (1) | 30 | % | 1 |
| %massique monomères (2) | 12 | % | 1 |
| Agent polaire (tétrahydrofurfuryl éthyle éther) | $1,9.10^{-4}$ | Mol/L | 1 |
| Initiateur actif (hexaméthylèneimine lithiée) | $6,01.10^{-4}$ | Mol/L | 1 |
| Temps de séjour | 30 | Min | 1 |
| | 30 | Min | 2 |
| Température | 75 | °C | 1 |
| | 90 | | 2 |
| Conversion massique (3) | 74 | % | 1 |
| | 95 | % | 2 |
| (1) en poids par rapport à la somme de toutes les entrées massiques en monomères du procédé<br>(2) en poids par rapport à la somme de toutes les entrées massiques du procédé<br>(3) conversion massique en monomères en sortie du réacteur | | | |

Les caractéristiques du polymère obtenu en sortie du réacteur 2 sont données dans le tableau 8.

Tableau 8

| | | |
|---|---|---|
| Taux vinyl (4) | 25,5 | % |
| Taux styrène (5) | 28 | % |
| Tg | -45 | °C |
| Mn | 145,0 | kg/mol |
| IP | 1,8 | - |
| Quantité fonctions HMN | 5,1 | mmol/k g |
| Taux chaînes initiées HMN (6) | 75 | % |
| Quantité fonctions $(CH_3)_2SiOH$ | 3,9 | mmol/k g |
| Taux chaînes fonctionnalisées $(CH_3)_2SiOH$ (7) | 58 | % |
| (4) en poids par rapport aux unités butadiène présentes dans les chaînes polymère<br>(5) en poids par rapport aux unités butadiène et styrène<br>(6) rapport molaire entre la quantité de fonctions HMN déterminée par RMN et le nombre de bouts de chaîne calculé à partir de la valeur de Mn mesurée sur l'élastomère récupéré à l'issue de l'étape de fonctionnalisation avec l'hexaméthylcyclotrisiloxane.<br>(7) rapport molaire entre la quantité de fonctions $(CH_3)_2SiOH$ déterminée par RMN et le nombre de bouts de chaîne calculé à partir de la valeur de Mn mesurée sur l'élastomère récupéré à l'issue de l'étape de fonctionnalisation avec l'hexaméthylcyclotrisiloxane. | | |

Ainsi, cet exemple comparatif montre que si la conversion en monomères est trop élevée dans le réacteur 1 alors le taux de chaînes fonctionnalisées est inférieur à 90% à la sortie du réacteur 2.

**Exemple E** - Selon l'invention - Procédé continu à 2 réacteurs en série avec conversion de 60% dans le premier réacteur et fonctionnalisation des chaînes avec l'hexaméthylcyclotrisiloxane

Une synthèse de polymère styrène/butadiène est effectuée selon un procédé selon l'invention utilisant 2 réacteurs agités, supposés parfaitement agités en série.

Les conditions opératoires sont précisées dans le tableau 9.

Tableau 9

| Conditions opératoires | Valeur | Unité | Réacteur |
|---|---|---|---|
| Nombre réacteurs | 2 | - | - |
| Volume des réacteurs | 14 | L | 1 |
| | 14 | | 2 |
| %Styrène (1) | 33 | % | 1 |
| %massique monomères (2) | 12 | % | 1 |
| Agent polaire (tétrahydrofurfuryl éthyle éther) | $1,2.10^{-4}$ | Mol/L | 2 |
| Initiateur actif (hexaméthylèneimine lithiée) | $5,6.10^{-4}$ | Mol/L | 2 |
| Temps de séjour | 30 | Min | 1 |
| | 30 | Min | 2 |
| Température | 65 | °C | 1 |
| | 80 | | 2 |
| Conversion massique (3) | 61 | % | 1 |
| | 93 | % | 2 |
| (1) en poids par rapport à la somme de toutes les entrées massiques en monomères du procédé<br>(2) en poids par rapport à la somme de toutes les entrées massiques du procédé<br>(3) conversion massique en monomères en sortie du réacteur | | | |

Les caractéristiques du polymère obtenu en sortie du réacteur 2 sont données dans le tableau 10.

Tableau 10

| | | |
|---|---|---|
| Taux vinyl (4) | 25 | % |
| Taux styrène (5) | 28 | % |
| Tg | -46 | °C |
| Mn | 152,5 | kg/mol |
| IP | 1,7 | - |
| Quantité fonctions HMN | 4,9 | mmol/kg |
| Taux chaînes initiées HMN (6) | 75 | % |
| Quantité fonctions $(CH_3)_2SiOH$ | 6,0 | mmol/kg |

(suite)

| | | |
|---|---|---|
| Taux chaînes fonctionnalisées $(CH_3)_2SiOH$ (7) | 90 | % |
| (4) en poids par rapport aux unités butadiène présentes dans les chaînes polymère<br>(5) en poids par rapport aux unités butadiène et styrène<br>(6) rapport molaire entre la quantité de fonctions HMN déterminée par RMN et le nombre de bouts de chaîne calculé à partir de la valeur de Mn mesurée sur l'élastomère récupéré à l'issue de l'étape de fonctionnalisation avec l'hexaméthylcyclotrisiloxane.<br>(7) rapport molaire entre la quantité de fonctions $(CH_3)_2SiOH$ déterminée par RMN et le nombre de bouts de chaîne calculé à partir de la valeur de Mn mesurée sur l'élastomère récupéré à l'issue de l'étape de fonctionnalisation avec l'hexaméthylcyclotrisiloxane. | | |

Ainsi, cet exemple montre qu'il est possible d'obtenir concomitamment avec le procédé continu selon l'invention une conversion élevée et un taux de chaînes fonctionnalisées élevé.

**Exemple F** - Selon l'invention - Procédé continu à 2 réacteurs en série avec conversion de 60% dans le premier réacteur et fonctionnalisation des chaînes avec le 3-(N,N-diméthylaminopropyl)triméthoxysilane

Une synthèse de polymère styrène/butadiène est effectuée selon un procédé selon l'invention utilisant 2 réacteurs agités, supposés parfaitement agités en série.

Les conditions opératoires sont précisées dans le tableau 11.

Tableau 11

| Conditions opératoires | Valeur | Unité | Réacteur |
|---|---|---|---|
| Nombre réacteurs | 2 | - | - |
| Volume des réacteurs | 14 | L | 1 |
| | 14 | | 2 |
| %Styrène (1) | 33 | % | 1 |
| %massique monomères (2) | 12 | % | 1 |
| Agent polaire (tétrahydrofurfuryl éthyle éther) | $1{,}2.10^{-4}$ | Mol/L | 2 |
| Initiateur actif (hexaméthylèneimine lithiée) | $5{,}6.10^{-4}$ | Mol/L | 2 |
| Temps de séjour | 30 | Min | 1 |
| | 30 | Min | 2 |
| Température | 65 | °C | 1 |
| | 80 | | 2 |
| Conversion massique (3) | 63 | % | 1 |
| | 95 | % | 2 |
| (1) en poids par rapport à la somme de toutes les entrées massiques en monomères du procédé<br>(2) en poids par rapport à la somme de toutes les entrées massiques du procédé<br>(3) conversion massique en monomères en sortie du réacteur | | | |

Les caractéristiques du polymère obtenu en sortie du réacteur 2 sont données dans le tableau 12.

Tableau 12

| | | |
|---|---|---|
| Taux vinyl (4) | 25 | % |
| Taux styrène (5) | 28 | % |
| Tg | -46 | °C |
| Mn | 154,2 | kg/mol |

(suite)

| | | |
|---|---|---|
| IP | 1,7 | - |
| Quantité fonctions HMN | 5,1 | mmol/kg |
| Taux chaînes initiées HMN (6) | 77 | % |
| Quantité fonctions **DMAPTMS** | 6,0 | mmol/kg |
| Taux chaînes fonctionnalisées DMAPTMS (7) | 92 | % |
| (4) en poids par rapport aux unités butadiène présentes dans les chaînes polymère<br>(5) en poids par rapport aux unités butadiène et styrène<br>(6) rapport molaire entre la quantité de fonctions HMN déterminée par RMN et le nombre de bouts de chaîne calculé à partir de la valeur de Mn mesurée sur l'élastomère récupéré à l'issue de l'étape de fonctionnalisation avec le DMAPTMS.<br>(7) rapport molaire entre la quantité de fonctions DMAPTMS déterminée par RMN et le nombre de bouts de chaîne calculé à partir de la valeur de Mn mesurée sur l'élastomère récupéré à l'issue de l'étape de fonctionnalisation avec le DMAPTMS. | | |

Ainsi, cet exemple montre qu'il est possible d'obtenir concomitamment avec le procédé continu selon l'invention une conversion élevée et un taux de chaînes fonctionnalisées élevé.

**Exemple G** - Selon l'invention - Procédé continu à 3 réacteurs en série et fonctionnalisation des chaînes avec l'hexaméthylcyclotrisiloxane

Une synthèse de polymère butadiène/styrène est effectuée selon un procédé selon l'invention utilisant 3 réacteurs agités, supposés parfaitement agités en série.

Les conditions opératoires sont précisées dans le tableau 13.

Tableau 13

| Conditions opératoires | Valeur | Unité | Réacteur |
|---|---|---|---|
| Nombre réacteurs | 3 | - | - |
| Volume des réacteurs | 14 | L | 1 |
| | 14 | | 2 |
| | 14 | | 3 |
| %Styrène (1) | 28 | % | 1 |
| %massique monomères (2) | 12 | % | 1 |
| Agent polaire (tétrahydrofurfuryl éthyle éther) | $8,8.10^{-5}$ | Mol/L | - |
| Initiateur actif (hexaméthylèneimine lithiée) | $5,81.10^{-4}$ | Mol/L | 1 |
| Temps de séjour | 30 | Min | 1 |
| | 30 | Min | 2 |
| | 30 | Min | 3 |
| Température | 50 | °C | 1 |
| | 70 | °C | 2 |
| | 80 | °C | 3 |
| Conversion | 41 | % | 1 |

(suite)

| Conditions opératoires | Valeur | Unité | Réacteur |
|---|---|---|---|
| massique (3) | 72 | % | 2 |
| | 94 | % | 3 |
| (1) en poids par rapport à la somme de toutes les entrées massiques en monomères du procédé<br>(2) en poids par rapport à la somme de toutes les entrées massiques du procédé<br>(3) conversion massique en monomères en sortie du réacteur | | | |

Les caractéristiques du polymère obtenu en sortie du réacteur 3 sont données dans le tableau 14.

Tableau 14

| | | |
|---|---|---|
| Taux vinyl (4) | 25,5 | % |
| Taux styrène (5) | 27,5 | % |
| Tg | -46 | °C |
| Ip | 1,45 | - |
| Mn | 147,4 | kg/mol |
| Quantité fonctions HMN | 5,1 | mmol/kg |
| Taux chaînes initiées HMN (6) | 76 | % |
| Quantité fonctions **$(CH_3)_2SiOH$** | 6,6 | mmol/kg |
| Taux chaînes fonctionnalisées **$(CH_3)_2SiOH$** (7) | 96 | % |
| (4) en poids par rapport aux unités butadiène présentes dans les chaînes polymère<br>(5) en poids par rapport aux unités butadiène et styrène<br>(6) rapport molaire entre la quantité de fonctions HMN déterminée par RMN et le nombre de bouts de chaîne calculé à partir de la valeur de Mn mesurée sur l'élastomère récupéré à l'issue de l'étape de fonctionnalisation avec l'hexaméthylcyclotrisiloxane.<br>(7) rapport molaire entre la quantité de fonctions $(CH_3)_2SiOH$ déterminée par RMN et le nombre de bouts de chaîne calculé à partir de la valeur de Mn mesurée sur l'élastomère récupéré à l'issue de l'étape de fonctionnalisation avec l'hexaméthylcyclotrisiloxane. | | |

Ainsi, cet exemple montre qu'il est possible d'obtenir concomitamment avec le procédé continu selon l'invention une conversion élevée et un taux de chaînes fonctionnalisées élevé.

## Revendications

**1.** Procédé de synthèse en continu d'un élastomère diénique modifié comprenant au moins un atome de silicium directement relié à la chaîne élastomère, comprenant :

a) une étape de polymérisation au moyen de n réacteurs r1 à rn, équipés d'un système d'agitation interne, supposés parfaitement agités, disposés en série, n variant de 2 à 15, le réacteur r1 étant alimenté par une solution d'entrée comprenant un solvant, un ou plusieurs monomères, un initiateur de polymérisation anionique choisi parmi les amidures de lithium et un agent polaire, la conversion massique C1 dans le premier réacteur étant inférieure à 70%,

où C1=P1/M1
où P1 est la masse de polymère formé à la sortie du réacteur r1,
où M1 est la quantité massique de monomère(s) introduit(s) dans le réacteur r1,
la conversion massique totale Cn à la sortie du réacteur rn étant supérieure ou égale à 70%,
où

$$Cn = \frac{Pn}{\sum_{1}^{n} Mi}$$

où Pn est la masse de polymère formé à la sortie du réacteur rn, et Mi est la quantité massique de monomère(s) introduit(s) dans le réacteur ri, i variant de 1 à n,

b) une étape de modification de l'élastomère diénique vivant obtenu à l'étape précédente au moyen d'un agent de fonctionnalisation, de couplage ou d'étoilage, qui permet d'introduire dans l'élastomère un groupement fonctionnel comprenant au moins un atome de silicium directement relié à la chaîne élastomère,

l'agent de fonctionnalisation, de couplage ou d'étoilage, qui permet d'introduire dans l'élastomère un groupement fonctionnel comprenant au moins un atome de silicium directement relié à la chaîne élastomère, est au moins un composé répondant à la formule II :

$$SiR4_p(OR')_{4-p-q}(R3\text{-}X)_q, \qquad \text{(Formule II)}$$

dans laquelle,

- R3 est un radical hydrocarboné divalent aliphatique, saturé ou non, cyclique ou non, en $C_1$-$C_{18}$, aromatique en $C_6$-$C_{18}$;
- X est un atome d'hydrogène ou une fonction susceptible d'interagir avec une charge renforçante comprenant au moins un hétéroatome choisi parmi N, S, O, P;
- les radicaux R', substitués ou non substitués, identiques ou différents, représentent un groupe alkyle en $C_1$-$C_{10}$;
- les radicaux R4, substitués ou non substitués, identiques ou différents, représentent un groupe alkyle en $C_1$-$C_{10}$;
- p représente un nombre entier de valeur allant de 0 à 2, q représente un nombre entier de valeur 0 ou 1, sous réserve que $p+q \leq 2$.

2. Procédé selon la revendication 1, **caractérisé en ce que** n varie de 2 à 3.

3. Procédé selon l'une quelconque des revendications précédentes, **caractérisé en ce que** la conversion massique C1 dans le réacteur r1 est inférieure à 65%.

4. Procédé selon l'une quelconque des revendications précédentes, **caractérisé en ce que** la conversion massique totale Cn à la sortie du réacteur rn est supérieure ou égale à 80%.

5. Procédé selon l'une quelconque des revendications précédentes, **caractérisé en ce que** l'élastomère diénique est un copolymère de butadiène et d'un monomère vinylaromatique.

6. Procédé selon l'une quelconque des revendications précédentes **caractérisé en ce que** le temps de séjour dans le réacteur ri, i variant de 1 à n, est compris entre 1 et 60 minutes.

7. Procédé selon l'une quelconque des revendications précédentes, **caractérisé en ce que** l'agent de fonctionnalisation, de couplage ou d'étoilage ne comporte pas d'autre fonction que celle comprenant l'atome de silicium de type alcoxysilane.

8. Procédé selon l'une quelconque des revendications 1 à 6, **caractérisé en ce que** la fonction susceptible d'interagir avec une charge renforçante est une amine primaire protégée ou non, secondaire protégée ou non ou tertiaire, cyclique ou non, un isocyanate, une imine, un cyano, la fonction thiol protégée ou non, un carboxylate, un époxyde, une phosphine primaire protégée ou non, secondaire protégée ou non, ou tertiaire.

9. Procédé selon la revendication 8, **caractérisé en ce que** la fonction susceptible d'interagir avec une charge renforçante est une amine choisie parmi les 3-(N,N-dialkylaminopropyl)trialcoxysilane, les 3-(N,N-dialkylaminopropyl)alkyldialcoxysilane, les 3-(N,N-alkyltriméthylsilylaminopropyl)trialcoxysilane, les 3-(N,N-alkyltriméthylsilylaminopropyl)alkyldialcoxysilane, les 3-(N,N-bistriméthylsilylaminopropyl)trialcoxysilane, les 3-(N,N-bistriméthylsilylaminopropyl)alkyldialcoxysilane, les groupements alkyl étant méthyl ou éthyl et les groupements alcoxy étant methoxy ou éthoxy

**10.** Procédé selon la revendication 8, **caractérisé en ce que** la fonction susceptible d'interagir avec une charge renforçante est une fonction thiol, protégée ou non, choisie parmi les (S-trialkylsilylmercaptopropyl)trialcoxysilanes, les (S-trialkylsilylmercaptopropyl)alkyldialcoxysilanes, (S-trialkylsilylmercaptoéthyl)trialcoxysilanes et les (S-trialkylsilylmercaptoéthyl)alkyldialcoxysilanes, le groupement alkyl sur l'atome de silicium porteur des groupements alcoxysilanes étant le groupement méthyl ou éthyl, le groupement alcoxy étant le groupement méthoxy ou éthoxy, et le groupement alkyl sur le silicium lié à l'atome de soufre étant le groupement méthyl ou tert-butyl.

**11.** Procédé selon l'une quelconque des revendications 1 à 10, **caractérisé en ce qu'**il comprend une étape complémentaire de couplage ou d'étoilage au moyen d'un agent de couplage ou d'étoilage à base de dérivés de l'étain ou de silicium de formule $MR_xY_{4-x}$, dans laquelle M représente un atome Sn ou Si, x représente un nombre entier de valeur 0 à 2, de préférence de valeur 0 à 1, R représente un radical alkyle de 1 à 10 atomes de carbone, et Y est un atome d'halogène,.

**12.** Procédé selon l'une quelconque des revendications précédentes, **caractérisée en ce que**, à l'étape a), un ou plusieurs des réacteurs r2 à rn est en outre alimenté(s) par réinjection d'une solution, de préférence purifiée, comprenant du solvant et/ou des monomères et/ou de l'agent polaire.

## Patentansprüche

**1.** Verfahren zur kontinuierlichen Synthese eines modifizierten Dienelastomers, das mindestens ein direkt an die Elastomerkette gebundenes Siliciumatom umfasst, umfassend:

a) einen Schritt der Polymerisation mittels von n Reaktoren r1 bis rn, die mit einem internen Rührsystem ausgestattet sind, als perfekt gerührt angenommen werden und in Reihe angeordnet sind, wobei n von 2 bis 15 variiert, wobei der Reaktor r1 mit einer Eingangslösung beschickt wird, die ein Lösungsmittel, ein oder mehrere Monomere, einen anionischen Polymerisationsinitiator, der aus den Lithiumamididen ausgewählt ist, und ein polares Mittel umfasst, wobei die Massenumwandlung C1 in dem ersten Reaktor weniger als 70 % beträgt,

wobei C1=P1/M1
wobei P1 de Masse des gebildeten Polymers am Ausgang des Reaktors r1 ist,
wobei M1 die Massenmenge des(der) in den Reaktor r1 eingeführten Monomers(Monomere) ist,
wobei die Gesamtmassenumwandlung Cn am Ausgang des Reaktors rn größer oder gleich 70 % ist, wobei

$$Cn = \frac{Pn}{\sum_1^n Mi}$$

wobei Pn die Masse des gebildeten Polymers am Ausgang des Reaktors rn ist und Mi die Massenmenge des(der) in den Reaktor ri eingeführten Monomers(Monomere) ist, wobei i von 1 bis n variiert,

b) einen Schritt des Modifizierens des im vorhergehenden Schritt erhaltenen lebenden Dienelastomers mittels eines Funktionalisierungs-, Kopplungs- oder Sternbildungsmittels, das es ermöglicht, eine Funktionsgruppe in das Elastomer einzuführen, die mindestens ein direkt an die Elastomerkette gebundenes Siliciumatom umfasst,

wobei das Funktionalisierungs-, Kopplungs- oder Sternbildungsmittel, das es ermöglicht, eine Funktionsgruppe in das Elastomer einzuführen, die mindestens ein direkt an die Elastomerkette gebundenes Siliciumatom umfasst, mindestens eine Verbindung ist, die der Formel II entspricht:

$SiR4_p(OR')_{4-p-q}(R3\text{-}X)_q$, (Formel II)

in der,

- R3 ein zweiwertiger aliphatischer, gesättigter oder ungesättigter, zyklischer oder nicht zyklischer, $C_6$-$C_{18}$-aromatischer $C_1$-$C_{18}$-Kohlenwasserstoffrest ist;
- X ein Wasserstoffatom ist oder eine Funktion, die geeignet ist, mit einem verstärkenden Füllstoff in Wechselwirkung zu treten, der mindestens ein aus N, S, O, P ausgewähltes Heteroatom umfasst;
- die substituierten oder unsubstituierten, identischen oder verschiedenen Reste R' für eine $C_1$-$C_{10}$-Alkylgruppe stehen;
- die substituierten oder unsubstituierten, identischen oder verschiedenen Reste R4 für eine $C_1$-$C_{10}$-Alkylgruppe stehen;
- p für eine ganze Zahl mit einem Wert von 0 bis 2 steht, q für eine ganze Zahl mit einem Wert von 0 oder 1 steht, sofern $p+q \leq 2$.

**2.** Verfahren nach Anspruch 1, **dadurch gekennzeichnet, dass** n von 2 bis 3 variiert.

**3.** Verfahren nach einem der vorhergehenden Ansprüche, **dadurch gekennzeichnet, dass** die Massenumwandlung C1 in dem Reaktor r1 weniger als 65 % beträgt.

**4.** Verfahren nach einem der vorhergehenden Ansprüche, **dadurch gekennzeichnet, dass** die Gesamtmassenumwandlung Cn am Ausgang des Reaktors rn größer oder gleich 80 % ist.

**5.** Verfahren nach einem der vorhergehenden Ansprüche, **dadurch gekennzeichnet, dass** das Dienelastomer ein Copolymer aus Butadien und einem vinylaromatischen Monomer ist.

**6.** Verfahren nach einem der vorhergehenden Ansprüche, **dadurch gekennzeichnet, dass** die Verweilzeit in dem Reaktor ri, wobei i von 1 bis n variiert, zwischen 1 und 60 Minuten beträgt.

**7.** Verfahren nach einem der vorhergehenden Ansprüche, **dadurch gekennzeichnet, dass** das Funktionalisierungs-, Kopplungs- oder Sternbildungsmittel keine andere Funktion enthält als diejenige, die das Siliciumatom vom Typ Alkoxysilan umfasst.

**8.** Verfahren nach einem der Ansprüche 1 bis 6, **dadurch gekennzeichnet, dass** die Funktion, die geeignet ist, mit einem verstärkenden Füllstoff in Wechselwirkung zu treten, ein geschütztes oder ungeschütztes primäres, geschütztes oder ungeschütztes sekundäres oder tertiäres, zyklisches oder nicht zyklisches, Amin, ein Isocyanat, ein Imin, ein Cyano, die geschützte oder ungeschützte Thiolfunktion, ein Carboxylat, ein Epoxid, ein geschütztes oder ungeschütztes primäres, geschütztes oder ungeschütztes sekundäres oder tertiäres Phosphin ist.

**9.** Verfahren nach Anspruch 8, **dadurch gekennzeichnet, dass** die Funktion, die geeignet ist, mit einem verstärkenden Füllstoff in Wechselwirkung zu treten, ein Amin ist, das aus den 3-(N,N-dialkylaminopropyl)trialkoxysilanen, den 3-(N,N-dialkylaminopropyl)alkyldialkoxysilanen, den 3-(N,N-alkyltrimethylsilylaminopropyl)trialkoxysilanen, den 3-(N,N-alkyltrimethylsilylaminopropyl)alkyldialkoxysilanen, den 3-(N,N-bistrimethylsilylaminopropyl)trialkoxysilanen, den 3-(N,N-bistrimethylsilylaminopropyl)alkyldialkoxysilanen ausgewählt ist, wobei die Alkylgruppen Methyl oder Ethyl sind und wobei die Alkoxygruppen Methoxy oder Ethoxy sind

**10.** Verfahren nach Anspruch 8, **dadurch gekennzeichnet, dass** die Funktion, die geeignet ist, mit einem verstärkenden Füllstoff in Wechselwirkung zu treten, eine geschützte oder ungeschützte Thiolfunktion ist, die unter den (S-trialkylsilylmercaptopropyl)trialkoxysilanen, den (S-trialkylsilylmercaptopropyl)alkyldialkoxysilanen, (S-trialkylsilylmercaptoethyl)trialkoxysilanen und den (S-trialkylsilylmercaptoethyl)alkyldialkoxysilanen ausgewählt ist, wobei die Alkylgruppe an dem Siliciumatom, die Alkoxysilangruppen trägt, die Methyl- oder Ethylgruppe ist, wobei die Alkoxygruppe die Methoxy- oder Ethoxygruppe ist und wobei die Alkylgruppe an dem Silicium, das an das Schwefelatom gebunden ist, die Methyl- oder tert-Butylgruppe ist.

**11.** Verfahren nach einem der Ansprüche 1 bis 10, **dadurch gekennzeichnet, dass** es einen ergänzenden Kopplungs- oder Sternbildungsschritt mittels eines Kopplungs- oder Sternbildungsmittels auf Basis von Zinn- oder Siliciumderivaten mit der Formel $MR_XY_{4-x}$ umfasst, wobei M für ein Sn- oder Si-Atom steht, x für eine ganze Zahl mit einem Wert von 0 bis 2, bevorzugt mit einem Wert von 0 bis 1, steht, R für einen Alkylrest mit 1 bis 10 Kohlenstoffatomen steht und Y ein Halogenatom ist.

**12.** Verfahren nach einem der vorhergehenden Ansprüche, **dadurch gekennzeichnet, dass**, im Schritt a), ein oder mehrere der Reaktoren r2 bis rn ferner durch Wiedereinführen einer, bevorzugt gereinigten, Lösung beschickt wird(werden), die Lösungsmittel und/oder Monomere und/oder polares Mittel umfasst.

## Claims

1. Process for the continuous synthesis of a modified diene elastomer comprising at least one silicon atom directly connected to the elastomer chain, comprising:

   a) a stage of polymerization by means of n reactors r1 to rn which are equipped with an internal stirring system, which are assumed perfectly stirred and which are arranged in series, n varying from 2 to 15, the reactor r1 being fed by an input solution comprising a solvent, one or more monomer(s), an anionic polymerization initiator chosen from lithium amides and a polar agent,

      the conversion by weight $C_1$ in the first reactor being less than 70%,
      where $C_1 = P_1/W_1$
      where $P_1$ is the weight of polymer formed at the outlet of the reactor r1,
      where $W_1$ is the amount by weight of monomer(s) introduced into the reactor r1,
      the total conversion by weight $C_n$ at the outlet of the reactor rn being greater than or equal to 70%,
      where:

$$C_n = \frac{P_n}{\sum_1^n W_i}$$

      where $P_n$ is the weight of polymer formed at the outlet of the reactor rn, and $W_i$ is the amount by weight of monomer(s) introduced into the reactor ri, i varying from 1 to n,

   b) a stage of modification of the living diene elastomer obtained in the preceding stage by means of a functionalization, coupling or star-branching agent, which makes it possible to introduce, into the elastomer, a functional group comprising at least one silicon atom directly connected to the elastomer chain,

   the functionalization, coupling or star-branching agent which makes it possible to introduce, into the elastomer, a functional group comprising at least one silicon atom directly connected to the elastomer chain, is at least one compound corresponding to the formula (II):

$$SiR4_p(OR')_{4-p-q}(R3\text{-}X)_q, \qquad \text{(Formula II)}$$

   in which:

   - R3 is a saturated or unsaturated, cyclic or non-cyclic, divalent $C_1$-$C_{18}$ aliphatic hydrocarbon radical or divalent $C_6$-$C_{18}$ aromatic hydrocarbon radical, preferably a linear or branched, divalent aliphatic hydrocarbon radical, more preferably a linear divalent aliphatic hydrocarbon radical and more preferably still the linear $C_2$ or $C_3$ hydrocarbon radical;
   - X is a hydrogen atom or a functional group capable of interacting with a reinforcing filler comprising at least one heteroatom chosen from N, S, O or P;
   - the R' radicals, which are substituted or unsubstituted and identical or different, represent a $C_1$-$C_{10}$, indeed even $C_1$-$C_8$, alkyl group, preferably a $C_1$-$C_4$ alkyl group, more preferably methyl and ethyl;
   - the R4 radicals, which are substituted or unsubstituted and identical or different, represent a $C_1$-$C_{10}$ alkyl group, indeed even a $C_1$-$C_8$ alkyl group;
   - p represents an integer with a value ranging from 0 to 2 and q represents an integer with the value 0 or 1, with the proviso that $p + q \leq 2$.

2. Process according to Claim 1, **characterized in that** n varies from 2 to 3.

3. Process according to either one of the preceding claims, **characterized in that** the conversion by weight $C_1$ in the reactor r1 is less than 65%.

4. Process according to any one of the preceding claims, **characterized in that** the total conversion by weight $C_n$ at the outlet of the reactor rn is greater than or equal to 80%.

5. Process according to any one of the preceding claims, **characterized in that** the diene elastomer is a copolymer of

butadiene and of a vinylaromatic monomer.

6. Process according to any one of the preceding claims, **characterized in that** the residence time in the reactor ri, i varying from 1 to n, is between 1 and 60 minutes.

7. Process according to any one of the preceding claims, **characterized in that** the functionalization, coupling or star-branching agent does not comprise another functional group than that comprising the silicon atom of alkoxysilane type.

8. Process according to any one of claims 1 to 6, **characterized in that** the functional group capable of interacting with a reinforcing filler is a protected or unprotected primary amine, a protected or unprotected secondary amine or a tertiary amine which is cyclic or non-cyclic, an isocyanate, an imine, a cyano, the protected or unprotected thiol functional group, a carboxylate, an epoxyde or a protected or unprotected primary phosphine, a protected or unprotected secondary phosphine or a tertiary phosphine.

9. Process according to claim 8, **characterized in that** the functional group capable of interacting with a reinforcing filler is an amine chosen from (3-N,N-dialkylaminopropyl)trialkoxysilanes, (3-N,N-dialkylaminopropyl)alkyldialkoxysilanes, (3-N,N-alkyltrimethylsilylaminopropyl)trialkoxysilanes, (3-N,N-alkyltrimethylsilylaminopropyl)alkyldialkoxysilanes, (3-N,N-bistrimethylsilylaminopropyl)trialkoxysilanes or (3-N,N-bistrimethylsilylaminopropyl)alkyldialkoxysilanes, the alkyl groups being methyl or ethyl and the alkoxy groups being methoxy or ethoxy.

10. Process according to Claim 8, **characterized in that** the functional group capable of interacting with a reinforcing filler is a protected or unprotected thiol functional group chosen from (S-trialkylsilylmercaptopropyl)trialkoxysilanes, (S-trialkylsilylmercaptopropyl)alkyldialkoxysilanes, (S-trialkylsilylmercaptoethyl)trialkoxysilanes and (S-trialkylsilylmercaptoethyl)alkyldialkoxysilanes, the alkyl group on the silicon atom bearing the alkoxysilane groups being the methyl or ethyl group, the alkoxy group being the methoxy or ethoxy group and the alkyl group on the silicon bonded to the sulfur atom being the methyl or tert-butyl group.

11. Process according to any one of Claims 1 to 10, **characterized in that** it comprises a complementary stage of coupling or star-branching by means of a coupling or star-branching agent based on tin or silicon derivatives of formula $MR_xY_{4-x}$, in which M represents a Sn or Si atom, x represents an integer with a value from 0 to 2, preferably with a value from 0 to 1, R represents an alkyl radical of 1 to 10 carbon atoms, and Y is a halogen atom.

12. Process according to any one of the preceding Claims, **characterized in that**, at stage a), one or more of the reactors r2 to rn additionally being optionally fed by reinjection of a preferably purified solution comprising solvent and/or monomers and/or polar agent.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- JP 4655706 B
- US 20120245275 A1
- WO 2016162528 A
- WO 2015063161 A1
- WO 2015044225 A1
- WO 2015018772 A1
- WO 2015018600 A1
- FR 3009556 A1
- EP 2266819 A1

### Littérature non-brevet citée dans la description

- **VILMIN, F** ; **DUSSAP, C.** ; **COSTE, N.** *Applied Spectroscopy*, 2006, vol. 60, 619-29